Europäisches Patentamt

European Patent Office

Office européen des brevets

(19)

(11) Publication number: **0 162 543**
A2

(12) # EUROPEAN PATENT APPLICATION

(21) Application number: 85301943.8

(22) Date of filing: 20.03.85

(51) Int. Cl.⁴: **H 02 G 9/00**
H 01 R 13/523, H 02 G 1/10

(30) Priority: 22.03.84 GB 8407473

(43) Date of publication of application:
27.11.85 Bulletin 85/48

(84) Designated Contracting States:
AT BE CH DE FR GB IT LI LU NL SE

(71) Applicant: FRAMO DEVELOPMENTS (U.K.) LIMITED
110 Coombe Lane
London SW20 OAY(GB)

(72) Inventor: Mohn, Frank
110 Coombe Lane
London SW20 0AY(GB)

(74) Representative: Jones, Ian et al,
POLLAK MERCER & TENCH High Holborn House 52-54
High Holborn
London WC1V 6RY(GB)

(54) **Underwater electric connection systems.**

(57) Electric power transmission to an undersea installation (4) is effected by movement of a conductor assembly (20) through a guide pipe (11) under fluid pressure acting on a piston (25) at the leading end of the assembly. The fluid can be a dielectric oil and the assembly (20) can be hollow for circulation of the oil for cleaning contacts and for cooling purposes as well as for operating equipment in the undersea installation and for monitoring its performance.

EP 0 162 543 A2

./...

FIG.1

-1-

ELECTRIC CONNECTION SYSTEMS

DESCRIPTION

The invention relates to electric connection systems for example for the transmission of electric power to submerged installations.

Difficulties have been experienced in maintaining the integrity of electric power cables in the underwater transmission of electric power, for example to a subsea installation from an off-shore platform or from shore and where the subsea installation is retrievable, problems are encountered in effecting connection of the cable to equipment and in ensuring effective electrical connections against the effects of such factors as corrosion, dirt and mechanical damage during installation.

The invention accordingly provides a method and a means for electrically connecting together first and second stations spaced physically apart, in which electrical conductor means is fed from the first station, at least in part under fluid pressure, through a guide pipe extending between the stations, to establish electrical connection with co-operating means at the second station.

The second station can comprise a submerged installation having a base frame resting on a sea bed and arranged to receive a retrievable unit containing equipment which is to be put into electrical communication with the first station, for example an off-shore platform, for the purpose at least of supplying electrical power. The leading end of the conductor means can be arranged to be moved into electrical connection with this equipment through the base frame and to be withdrawn into the base frame when the retrievable unit is being moved into or out of engagement with the base frame.

One or more additional piston elements, with passages containing valves providing appropriate pressure drops, can be spaced along the conductor means to divide the force acting on it.

Thus a fluid pressure difference can be created on opposed sides of a piston element connected to the conductor means and making a sliding seal with the guide pipe inner surface, so that the leading end of the electric conductor means is moved along the pipe to the second station.

The system preferably has fluid pressure return and supply paths to permit the fluid pressure to be applied to effect reverse movement of the electric conductor means to break the electrical connection.

The conductor means is preferably a hollow conductor pipe, comprising concentric tubular conductors separated by one or more insulating sleeves, the interior of which provides one of the paths the other being in the annular space between the conductor pipe assembly and the guide pipe.

The conductor means is conveniently formed from sections joined together with sliding contacts and a surrounding protection pipe can be provided to contribute mechanical strength. The hollow conductor means can comprise a plurality of conductor pipes insulated from one another by one or more insulation sleeves and assembly can conveniently be effected by providing the outer protection pipe sections with screw threaded connection means and the conductor pipes with plug-and-spigot configurations. Where the conductor means is hollow, there are then three passages available in the system for reception or circulation of fluid, namely within the conductor means, between it and the protection pipe, and between the protection and outer or guide pipes.

The pressure fluid is conveniently a dielectric oil which can act as insulation for the surfaces of electrical conductors over which it flows. Where the connector device has engageable contacts, the dielectric oil can be arranged to flush the contacts before connection is established and if the dielectric oil is circulated after connection it can be arranged to flow through leakage paths to effect a continuous flushing of the contacts. The connector device may however operate inductively, with or without a transformer action, and in either form of device, circulating dielectric oil can be employed for cooling.

The circulating oil can be communicated with equipment requiring oil circulation located within the second station and/or can be used as a driving medium for such equipment. The condition and performance of such equipment can be monitored by means of the circulating oil, as by measurements at the first station of its temperature and of the impurities it carries. The dielectric oil can in any event be maintained at a pressure sufficient to provide environmental protection by excluding ambient fluids.

The hollow conductor pipe can be associated not only with the outer protection pipe mentioned but also with an internal protection pipe. The conductor pipes can be held in spaced relation to the or each protection pipes by insulating spacers for example longitudinal ribs of plastics material extruded on the outer surface of the inner protection pipe and on that of the conductor pipe.

A pipe assembly comprising a conductor pipe with inner and outer protection pipes can be advanced along the guide pipe in the manner described above, by means of one or more piston elements secured to the assembly and making a sliding seal to the inner surface of the guide pipe. Because of the second protection pipe, the assembly has four passages for fluid, and the fluid pressure medium which acts on the or each piston element can be one, for example, water, which is replaced after the leading end of the conductor assembly has reached the second station. Valve means in the piston element or elements are then opened and the annular space between the outer protection pipe and the guide pipe, and the interior of the inner protection pipe are available separately for fluid delivery from the second station. Where the second station comprises an undersea installation including a gas/oil separator, the annular space between the outer protection pipe and the guide pipe can convey oil to the off-shore platform and the inner protection pipe interior can convey gas, or vice versa.

Dielectric oil can be circulated in the annular spaces between the conductor pipe and the inner and outer protection pipes and can serve the same auxiliary functions as before.

The invention is further described below, by way of illustration, with reference to the accompanying drawings, in which:

Figure 1 is a schematic part sectional view of an electric power transmission system between a platform and a subsea installation;

Figure 2 is a schematic sectional view of end and intermediate portions of the transmission system, on a larger scale;

Figure 3 is a schematic view on a larger scale of equipment on a deck of the platform at the platform end of the transmission system;

Figure 4 is a fragmentary longitudinal sectional view through a conductor pipe included in the transmission system;

Figure 5 is a schematic view of a second electric power transmission system embodying the invention;

Figure 6 is a fragmentary longitudinal sectional view through a joint in a conductor assembly of the system of Figure 5, taken on the line VI-VI of Figure 7;

Figure 7 is a fragmentary cross-sectional view through the conductor assembly of Figure 5;

Figures 8A and 8B are sectional side views of a first connector device for use in the system of Figures 5-7, shown in disconnected and connected conditions; and

Figures 9A and 9B are like views of a second such connector device.

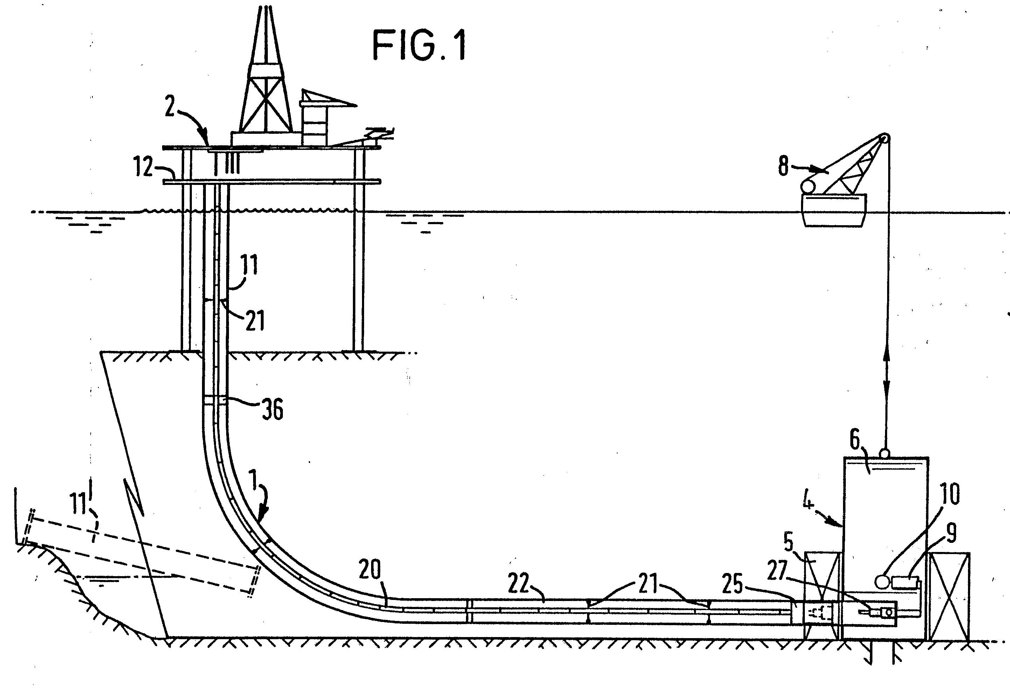

In Figure 1, there is shown an electric power transmission system 1 extending between a platform 2 supported on the sea floor, and a remotely located subsea installation 4, comprising a stationary base frame 5 of annular form surrounding a retrievable unit 6. The unit 6, which can be lifted from the base frame 5 by suitable lifting apparatus carried on a vessel 8, includes equipment to which electric power has to be supplied, for example, an electric motor 9 for driving a pump 10.

The transmission system 1 comprises an outer or guide pipe 11, for example of steel, which extends from a deck 1 of the platform 2 through an aperture in the base frame 5 which is aligned with a recess in the unit 6. Alternatively, the guide pipe 11 can extend from an on-shore station as indicated by the guide pipe portion 11' in Figure 1.

-6-

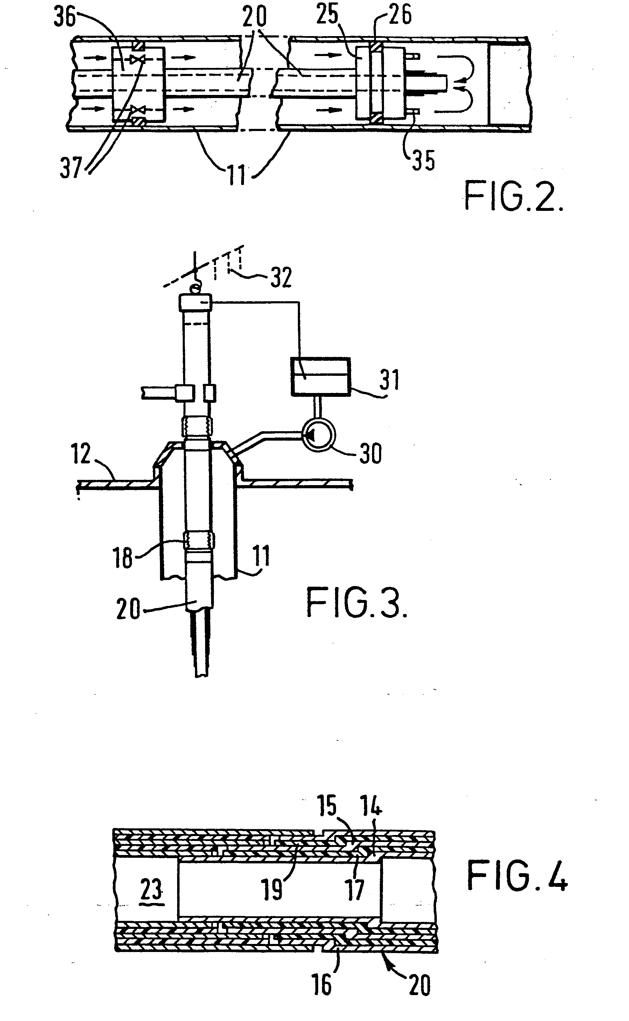

Within the guide pipe 11 there is concentrically
received a conductor pipe 20 comprising three concentric tubular conductors 14,15,16, for example of copper, of which the intermediate conductor 15 is electrically insulated from the inner and outer conductors 14,16 by inner and outer sleeves of solid insulating material 17,19, for example a plastics dielectric material. The conductor pipe 20 comprises relatively short sections connected together by way of a screw-threaded connection 18, and to preserve electrical continuity, the individual conductors are shaped to make plug-and-socket connections with the conductors of adjacent sections. Thus, as shown in Figure 4, the conductors and insulating sleeves are stepped inwardly at spaced positions at the end of one section, for reception in, and co-operation with the conductors and sleeves of the adjoining section. The outer conductor 16 of the one conductor pipe section terminates slightly short of the solid insulating sleeve 19 between it and the central tubular conductor 15 which itself extends a substantial distance beyond this sleeve. The insulating sleeve 17 between the central conductor 15 and the innermost conductor 14 terminates slightly beyond the central conductor, and the innermost conductor extends a substantial distance beyond that sleeve. At the adjoining end of the adjacent section, the concentric conductor tubes and intervening insulation sleeves display a contrary configuration.

The conductors of one section thus make sliding frictional fits within the conductors of the adjoining section as the screw-threaded connection 18 is made. The sliding frictional fit ensures electrical continuity along the conductor pipe, without substantial added electrical resistance at the connections. The protrusion of each insulating sleeve beyond the adjacent conductor which it surrounds ensures that effective insulation is maintained between the conductors at the connection.

At intervals along the conductor pipe 20, spacers 21 are provided to maintain concentricity of the pipe within the outer pipe 11. The spacers 21 comprise radial ribs such as not to materially obstruct the flow of fluid in the annular space 22 between the two pipes and have peripheral portions of low friction material for engagement with the inner surface of the outer pipe.

At its distal end, the conductor pipe 20 is secured to a piston element 25 surrounded by a seal ring 26 which sealingly engages the inner surface of the outer pipe 11. The conductor pipe 20 projects beyond the piston element 25 and is so arranged that the conductors 14,15,16 make good electrical connection with co-operating stationary conductors 27 in the recess of the retrievable unit 6 at the outer limit of movement of the pipe 20 along the pipe 11. The connection established can correspond to that between adjoining sections of the conductor pipe, or as described in detail with reference to Figures 8A and 8B.

At the deck 12, the interior 23 of the conductor pipe 20 and the annular space 22 communicate through suitable fittings with a circulation system comprising a pump 30 for feeding a fluid medium, for example, dielectric oil, that is, an electrically insulating oil, into the annular space 22 and a reservoir 31 for receiving the oil from the interior 23. The end of the conductor pipe 20 extends outwardly to electrical connections, indicated at 32 in Figure 3, for the tubular conductors 14,15,16.

With the outer pipe 11 extending between the platform 2 and the installation 4, and filled with the dielectric oil, the distal end section of the conductor pipe 20, which carries the piston element 25, is pushed down into the outer pipe. The next pipe section is connected to the top of the first and this too is advanced into the outer pipe. Oil in the outer pipe 11 ahead of the piston element 25 flows back through the conductor pipe interior 23 to the reservoir 31 as the conductor pipe, with the piston element and spacers 21, advances.

After a certain length of the conductor pipe 20 has been inserted, the frictional resistance and bending forces reach a level which prevents further advance in the manner described. From this position, the conductor pipe 20 is pulled along the outer pipe 11 by hydraulic pressure. This is achieved by actuation of the pump 30 to pump oil into the annular space 22. Pressure will build up against the piston element 25 and a pressure difference will develop across it because the oil ahead of the piston element is at atmospheric pressure due to communication with atmosphere through the conductor pipe interior 23. Because of this pressure difference, the piston element 25 and the distal end of the conductor pipe 20 will be advanced through the guide pipe 11 until the installation 4 is reached, when connection with the stationary conductors 27 of the unit 6 automatically follows.

Electrical communication between the platform 2 and the installation 4 having thus been established, operation of the latter can commence. The fluid pressure supplied by the pump 30 can be maintained and dielectric oil circulation can continue through valved passage means extending through the piston 25 and through passages provided into the conductor pipe interior in the region of the stationary conductors 27. The valves in the passage means of the piston element 25 can be moved to the open position for this purpose by excess fluid pressure, or in response to electric communication signals transmitted through the conductors of the conductor pipe 20.

If desired, mechanical locating and/or connection means 35 can be provided on the forward face of the piston element 25 for engagement by co-operating fixed means in the unit 6.

The outer pipe 11 may in some instances be extremely long, of the order of several kilometres, and it may then be desirable to divide the total force applied to the movement of the conductor pipe 20. To this end, there can be provided intermediate piston elements 36 provided with passages therethrough fitted with bypass valves 37. These valves 77 provide a predetermined pressure drop across the piston element 36, so that the pulling force is distributed along the length of the conductor pipe.

When the retrievable unit 16 has to be replaced, the conductor pipe can be withdrawn from the stationary contacts 27 either by a pulling force applied from the deck 12 of the platform 2, or by the use of the oil advanced system in reverse, that is, by the supply of pressure oil through the conductor pipe interior, the annular space around the conductor pipe providing the return path. Such withdrawal can be the small movement needed to bring the piston element 25 temporarily into the base frame 5 during removal or installation of the unit 6.

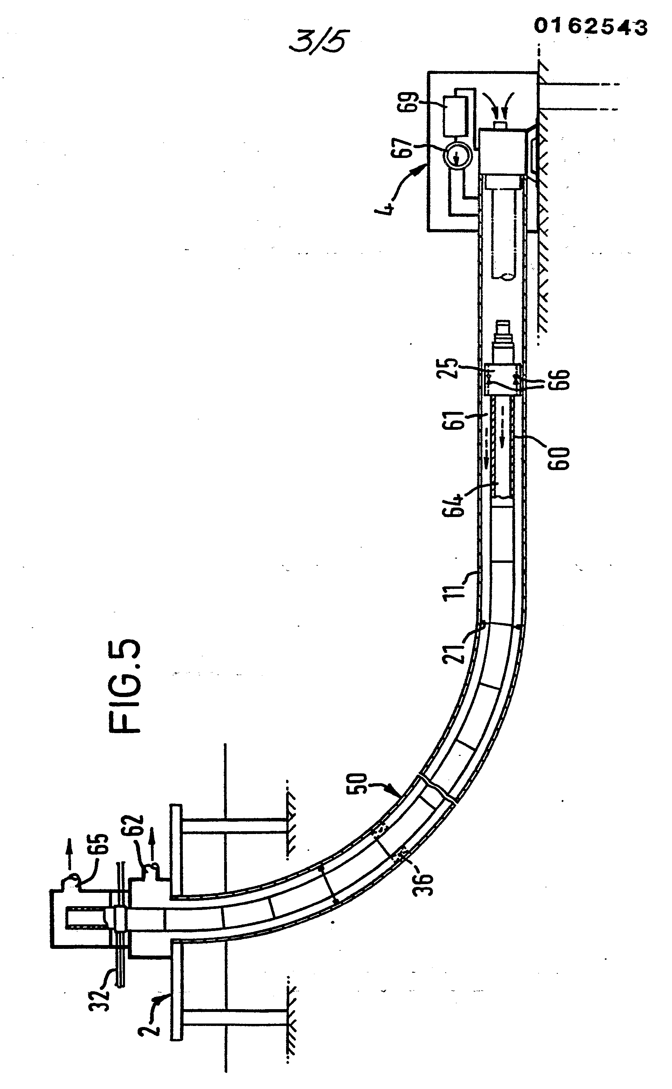

In Figures 5-7, parts similar to those of Figures 1-4 are indicated by like reference numerals. The electric power transmission system 50 illustrated in Figures 5-7 again extends between a platform 2 and a subsea installation 4. Again, an outer or guide tube 11 extends between the platform and the installation, and to establish electrical communication between them a conductor pipe 20 is again advanced along the outer pipe under fluid pressure to engage stationary contacts in the installation.

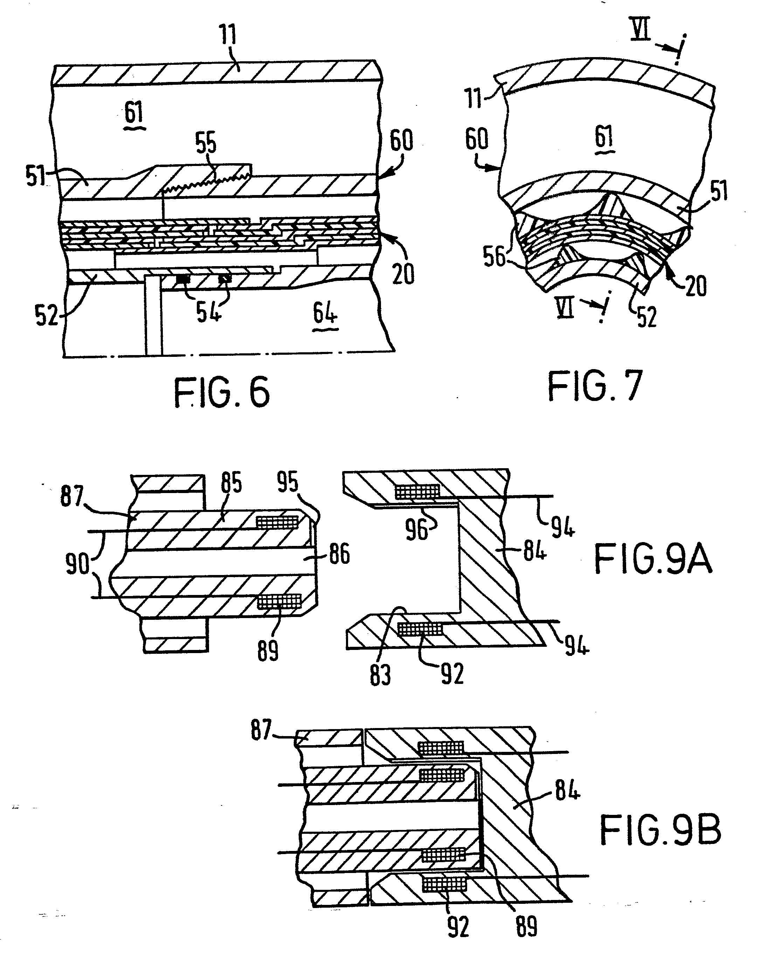

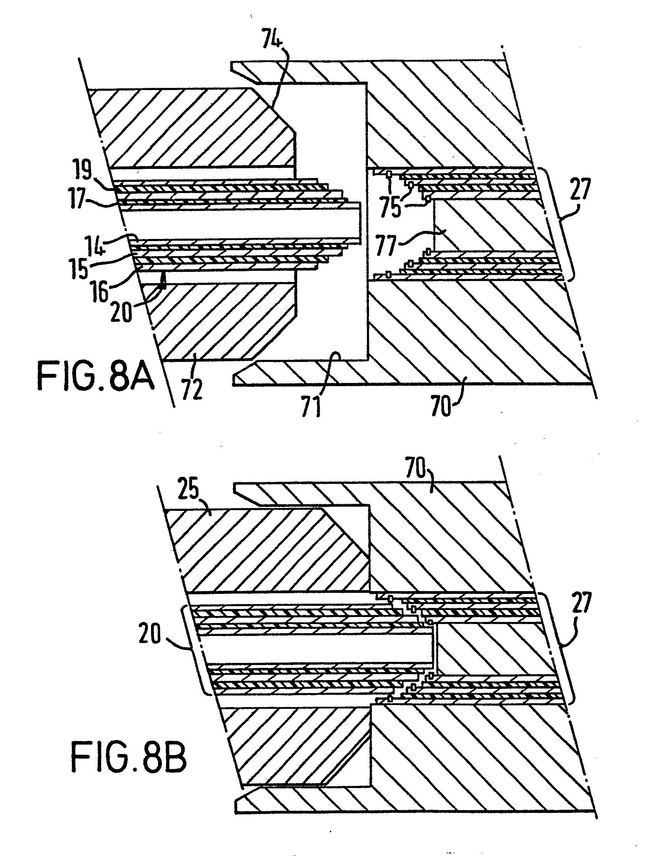

The conductor pipe 20, although of substantially the same construction as has been described with reference to Figures 1-4, is in this system concentrically received within a steel outer protection pipe 51 and it concentrically receives within it an inner protection pipe 52 also of steel. The three pipes 20, 51 and 52 together form a conductor assembly 60 built up from relatively short sections, in each of which the conductor pipe 20 is secured at one end only to the inner and outer protection pipes 51,52 to allow for relative thermal expansion and contraction. Adjoining ends of the conductor assembly sections have conductor pipe connections similar to those described above and shown in Figure 4. The inner protection pipe ends seal together by means of O-rings 54 and there is a screw connection 55 for the outer protection pipe sections. To maintain appropriate spacing of the protection and conductor pipes, longitudinal ribs 56 of plastics material are extruded on the exteriors of the inner protection pipe 52 and the conductor pipe 20 as shown in Figure 7. These ribs 56 maintain correct relative positioning, but do not materially obstruct fluid flow along the assembly of dielectric oil which can be circulated outwardly between the pipes 20 and 51 and returned between the pipes 20 and 52.

The conductor assembly 60 is provided with a piston element 25 at its distal end, with spacers 21 at appropriate positions along its length, and with intermediate piston elements 36 if required, the spacers and intermediate piston elements serving functions similar to such parts in Figures 1-4.

To establish electrical connection, the conductor assembly 60 is advanced along the outer tube into engagement with the stationary contacts of the installation 4 in much the same way as has been described in connection with Figures 1-4, by pressure fluid in the annular space 61 between the outer protection pipe 51 and the guide pipe 11, introduced through a pressure inlet 62 located on the platform 2. The pressure fluid discharges through the interior space 64 of the protection pipe 52 and an outlet 65 on the platform.

When the electrical connection has been established, the spaces 61 and 64 are redundant in respect of the electrical power transmission as the circulating dielectric oil flowing between the pipes 20,51,52 can serve all the functions of the circulating dielectric oil of the system of Figures 1-4. Valves 66 in the piston element, and similar valves in any additional piston elements 36, are thus opened and the spaces 61,64 emptied of pressure fluid so that they can be employed for conveyance of a material or of different materials extracted by the subsea installation 4. Thus, the installation 4 can comprise a separator by which oil is pumped, by pump 67 driven by electric motor 69, into the annular space 61 to the pressure inlet 62 which now functions as a discharge outlet, whilst gas is conveyed through the interior space 64 of the inner protection pipe 52 to the outlet 65.

In the connector device shown in Figures 8A and 8B, the fixed conductors 27 of the installation 4 comprise three concentric tubular conductors, with insulating sleeves between them, received in an axial bore in a connector part 70. The stationary connector part 70 has a cylindrical socket 71 for receiving the other connector part 72, to which is secured the piston element 25. The leading end of the movable connector part 72 tapers by way of a guide surface 74, which assists centering of the part in the socket, to a flat end from which the conductors 14,15,16 and the intermediate insulating sleeves 17,19 of the conductor pipe 20 protrude in staggered relationship, with the innermost conductor 14 leading. The conductors 27 are oppositely staggered within the bore and are grooved adjacent their outer ends to receive inwardly projecting contact rings 75 for engagement with the outer cylindrical surfaces of the exposed ends of the conductors 14,15 and 16. The interior of the innermost of the conductors 27 is closed by a plug portion 77 of the connector part 70.

To establish the electrical connection, the two parts of the connector device are moved together by the action of fluid pressure on the piston element 25, through the position shown in Figure 8A to the limit position shown in Figure 8B, in which electrical connection is established. The conductor pipe 20 is coaxially received within a bore in the connector part 72, so that supply and return paths for circulated dielectric oil are provided by the space 80, between the bore wall and the conductor pipe, and by the conductor pipe interior 18. During the advance of the connector part end into the socket, the dielectric oil displaced returns through one or both of these paths and in doing so will flush the socket interior and the exposed parts of the conductors to remove salt water and dirt that may be present, so as to ensure good electrical contact. The end of the conductor 14 is spaced from the plug portion 77 in the limiting position of Figure 8B, the contact rings 75 are incomplete, and the insulating sleeves 17,19 do not engage with their counterparts between the conductors 27 so that leakage paths exist between the conductor pipe interior 81 and the annular space 80. The possibility is thus provided of continuous fluid connection through the zone in which electrical contacts are made by a dielectric oil, so that the contacts are continually flushed. The circulated dielectric oil can also withdraw heat from this zone as may be desirable when high current loading occurs.

The connector device of Figures 8A and 8B can be employed with the appropriate number of conductors for either AC or DC, but where AC only is to be supplied, the connector device of Figures 9A and 9B can be employed instead. The stationary connector part 84 provides a socket 83 for receiving a plug 85 with a central bore 86, projecting coaxially outwardly from within an outer bore of the other connector part 87. Both the plug 85 and the part 84 have appropriately tapered end surfaces to facilitate centering. The plug 85 has at its leading end around the bore 86 an annular coil or winding 89 connected to leads 90, and the connector part 84 has another annular coil or winding 92 located around the socket and connected to leads 94.

The movable connector part is again associated with a piston element such as the piston element 25 so that it can be moved through the position shown in Figure 9A to the end or limit position shown in Figure 9B, in which the winding 89 is coaxially received in precise axial registration within the winding 92. Again the socket 83 is flushed by displaced fluid. The two connector parts are thus efficiently inductively coupled for the transmission of power, and by suitable choice of the windings 89,92, a transformer action, that is, a voltage step up or step down can be effected if desired within the connector device. As with the connector device of Figures 8A and 8B, leakage paths are provided for circulating dielectric liquid in the zone at which the connector parts engage. The end face of the plug 85 can thus be provided with one or more radially extending grooves 95, and one or more longitudinally extending grooves 96 can be provided in the cylindrical wall of the socket 83. In the end position of Figure 9B, dielectric oil can be circulated through supply and return paths constituted by the bore 86 and the annular space between the plug and the surrounding connector part, to effect cooling of the connection zone.

It will be evident that the invention can be embodied in various ways other than as illustrated and described.

CLAIMS

1. A system for electrically connecting together first and second stations, the system comprising a guide pipe extending between the two stations, and electrical conductor means arranged to be moved along the guide pipe, at least in part under fluid pressure, from the first station to effect electrical connection with co-operating conductor means at the second station.

2. A system as claimed in claim 1 having supply and return paths for the pressure fluid to permit limited or complete return movement of the movable conductor means.

3. A system as claimed in claim 2 wherein the movable conductor means is hollow, the fluid supply and return paths being respectively within the conductor means and between the conductor means and the guide pipe.

4. A system as claimed in claim 3 wherein the hollow conductor means comprises a plurality of concentric conductor pipes separated by one or more sleeves of dielectric material.

5. A system as claimed in claim 2, 3 or 4 wherein the conductor means comprises electrical conductors and a protection pipe within and/or around the conductors, the or each protection pipe co-operating with the guide pipe and/or the electrical conductors to define one or more additional fluid paths.

6. A system as claimed in claim 5 wherein the other station is an undersea gas/oil extraction station and wherein at least one of the additional fluid paths is employed for conveyance of extracted gas/oil to the one station after establishment of the electrical connection.

7. A system as claimed in any preceding claim wherein the second station is an undersea station comprising a base frame receiving a retrievable unit carrying the co-operating conductor means, the guide pipe being secured to the base frame to permit movement of the movable conductor means part to engage the co-operating conductor means.

8. A system as claimed in any preceding claim having spaced along the movable conductor means a plurality of piston elements operative between the conductor means and the guide pipe, the or each piston element being spaced from the conductor means leading end and having valve means providing appropriate pressure drops.

9. A system as claimed in any preceding claim wherein the co-operating conductor means and the leading end of the movable conductor means are so arranged that the pressure fluid flushes contact areas of the conductor means prior to establishment of the electrical connection.

10. A system as claimed in any preceding claim wherein the co-operating conductor means and the leading end of the movable conductor means are arranged for reception of an annular winding within an outer annular winding to establish the electrical connection inductively.

11. A system as claimed in any preceding claim wherein circulation of pressure fluid after establishment of the electrical connection effects at least one of:

(a) continuous flushing of contact areas of the conductor means;

(b) cooling of the conductor means;

(c) driving of equipment within the second station;

(d) monitoring condition and/or performance of equipment at the second station;

(e) circulation of pressure fluid within the second station; and

(f) protection against entry into ths system of ambient fluid material.

12. A method of electrically connecting together first and second stations having a guide pipe extending therebetween, the method comprising the step of advancing an elongate conductor means along the guide pipe from the first station to establish electrical connection with co-operating conductor means at the second station, at least part of the advance of the conductor means being effected under fluid pressure.

13. A method as claimed in claim 12 wherein the pressure fluid is circulated in the guide pipe after establishment of the electrical connection, so as to effect at least one of:

(a) continuous flushing of contact areas of the conductor means;

(b) cooling of the conductor means;

(c) driving of equipment within the second station;

(d) monitoring condition and/or performance of equipment at the second station;

(e) circulation of pressure fluid within the second station; and

(f) protection against entry into the system of ambient fluid material.

FIG.1

FIG.2.

FIG.3.

FIG.4

FIG.5

0162543

FIG. 6

FIG. 7

FIG.9A

FIG.9B

FIG.8A

FIG.8B